(19) Europäisches Patentamt
European Patent Office
Office européen des brevets

(11) **EP 2 582 550 B1**

(12) **EUROPÄISCHE PATENTSCHRIFT**

(45) Veröffentlichungstag und Bekanntmachung des Hinweises auf die Patenterteilung:
**16.04.2014 Patentblatt 2014/16**

(51) Int Cl.:
***B60R 21/18*** *(2006.01)*

(21) Anmeldenummer: **11745919.8**

(22) Anmeldetag: **16.06.2011**

(86) Internationale Anmeldenummer:
**PCT/EP2011/003150**

(87) Internationale Veröffentlichungsnummer:
**WO 2011/157455 (22.12.2011 Gazette 2011/51)**

(54) **AUFBLASBARES GEWEBTES SCHLAUCHFÖRMIGES GURTBAND**

INFLATABLE WOVEN TUBULAR BELT

SANGLE TUBULAIRE TISSÉE GONFLABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2010 DE 102010023825**

(43) Veröffentlichungstag der Anmeldung:
**24.04.2013 Patentblatt 2013/17**

(73) Patentinhaber: **Berger, Johannes Alexander 87452 Altusried (DE)**

(72) Erfinder: **BERGER, Johann 87452 Altusried (DE)**

(74) Vertreter: **Fischer, Matthias et al
Fischer & Konnerth
Patentanwälte Partnerschaft
Schertlinstrasse 18
81379 München (DE)**

(56) Entgegenhaltungen:
**DE-A1- 19 932 940    US-A- 4 600 626**

**Beschreibung**

Die vorliegende Erfindung betrifft ein aufblasbares gewebtes schlauchförmiges Gurtband gemäß dem Oberbegriff des Anspruchs 1.

Aus der EP 1 056 894 B1 ist ein aufblasbares Gurtband bekannt, welches, in einem Fahrzeug installiert, im Falle einer Kollision als Aufprallkissen für den Fahrzeugpassagier dienen soll.

Die gattungsgemäße DE 199 32 940 A1 zeigt ein zweilagiges Gurtband, insbesondere für einen wenigstens teilweise aufblasbaren Sicherheitsgurt, wobei das als Flachschlauch geformte Gurtband eine untere (erste) Lage (UWL) und eine obere (zweite) Lage (OL) aufweist, die untere Lage (UWL) gewebt ist und unelastische Kettfäden (UK) aufweist, und die obere Lage (OL) aus einem in Gurtbandlängsrichtung elastischen Material besteht.

Es sind weitere als Gurtschlauch ausgebildete, einen Luftsack enthaltende Sicherheitsgurtsysteme bekannt, bei denen zwei Gurtlagen zwischen sich gefaltetes Luftsackgewebe enthalten. Naturgemäß trägt eine derartige Konstruktion gegenüber herkömmlichen "zweidimensionalen" Sicherheitsgurten immer auf, auch wenn die Ausführung des Gurtbandes wenig Höhe aufweist. Beim Umlenken bzw. auch Aufrollen eines derartigen Bandes treten jedoch Probleme auf, für welche bislang immer noch nicht befriedigende Lösungen gefunden wurden. Es entsteht beim Umlenken um einen Beschlag oder beim Aufrollen auf den Retraktor eine Relativbewegung des von der Umlenk- bzw. Aufwickelachse fernerliegenden Schlauchgurtbandabschnitts gegen den zur Aufroll- oder Aufwickelachse näheren Gurtbandabschnitt, so dass es zu Stauchungen und daraus resultierenden Knitterungen kommt. Dies verschlechtert den Gurt und daraus resultierend den Tragekomfort des Sicherheitsgurtes derartiger Konstruktion.

Auch die in der DE 199 32 940 A1 vorgeschlagene Lösung hat sich als nicht optimal gezeigt, da sich herausgestellt hat, dass die elastischen Kettfäden einer Lage zwar Verzüge und Verspannungen beim Umlenken sowie beim Auf- und Abrollen kompensieren können, dass die Kettfäden beider Lagen, also der oberen und der unteren Lage jedoch eine Mindestbruchlast haben müssen, um ihre Funktion erfüllen zu können. Elastische Kettfäden haben in diesem Zusammenhang gesehen keine nennenswerte Bruchlast

Es ist nun eine Aufgabe der Erfindung, ein Gurtband vorzuschlagen, bei dem die aus dem Stand der Technik bekannten Nachteile insbesondere dauerhafte Verzüge durch Auf- und Abrollen oder Umlenkungen vermieden oder zumindest verringert werden sollen.

Die Aufgabe wird gelöst mit einem Gurtband gemäß Anspruch 1. Durch die erfindungsgemäße Konstruktion derart, dass die Anzahl der ersten Kettfäden der oberen Weblage etwa 1,5-mal bis dreimal so groß ist wie die Anzahl der ersten Kettfäden der unteren Weblage, wird vorteilhafterweise erreicht, dass das Gurtband ein optimales Rollverhalten beim Auf- und Abrollen in und aus dem Retraktor zeigt. Auch das Umlenkverhalten zeigt sich tadellos. Die bei aus dem Stand der Technik bekannten Gurtbändern schon nach kurzem Einsatz auftretenden Welligkeiten und ein Krummliegen (Banane) im Band können bei der erfindungsgemäßen Konstruktion vermieden werden. Diejenige Weblage, welche weniger Kettfäden aufweist, als die andere wird beim Umlenken von der anderen Weblage sozusagen "geführt" und fügt sich überraschenderweise der jeweiligen Kontur der anderen Weblage mit mehr Kettfäden.

Die Aufgabe wird auch gelöst mit einem Gurtband gemäß Anspruch 2. Durch die erfindungsgemäße Konstruktion derart, dass der Titer der ersten Kettfäden der oberen Weblage etwa 1,5-mal bis dreimal so groß ist wie der Titer der ersten Kettfäden der unteren Weblage, wird vorteilhafterweise der gleiche vorteilhafte Effekt erreicht wie bei der oben erläuterten zweiten Lösung.

In der vorliegenden Beschreibung wird von ersten Kettfäden und zweiten Kettfäden gesprochen. Hierbei gilt die Definition, dass die ersten Kettfäden die Zugbelastung des erfindungsgemäßen Gurtbandes in der Funktion als Sicherheitsgurt übernehmen, während die zweiten Kettfäden - zusammen mit Schussfäden - schlauchbildende Komponenten darstellen, die im Wesentlichen keine Zugkräfte in Längsrichtung des schlauchförmigen Gurtbandes übernehmen.

Zum besseren Verständnis der Erfindung wird diese im Folgenden anhand von Ausführungsbeispielen im Zusammenhang mit einer Zeichnung näher beschrieben.

Fig. 1      zeigt schematisiert ein erfindungsgemäßes Gurtband, in einer Schnittdarstellung.

Fig. 1a     zeigt schematisiert das erfindungsgemäße Gurtband nach Fig. 1, mit zweiten Kettfäden enthaltenden Kettfadenbereichen, die zwischen die mittleren Kettfadenbereiche des Gurtbandes gefaltet sind.

Fig. 2      zeigt ein erstes Ausführungsbeispiel in einem Ausschnitt eines erfindungsgemäßen Gurtbandes nach Fig. 1 schematisch in einer Schnittdarstellung.

Fig. 3      zeigt schematisch die Umlenkung des erfindungsgemäßen Gurtbandes um einen Beschlag.

Fig. 4      zeigt ein weiteres Ausführungsbeispiel der Erfindung schematisch in einer Schnittdarstellung.

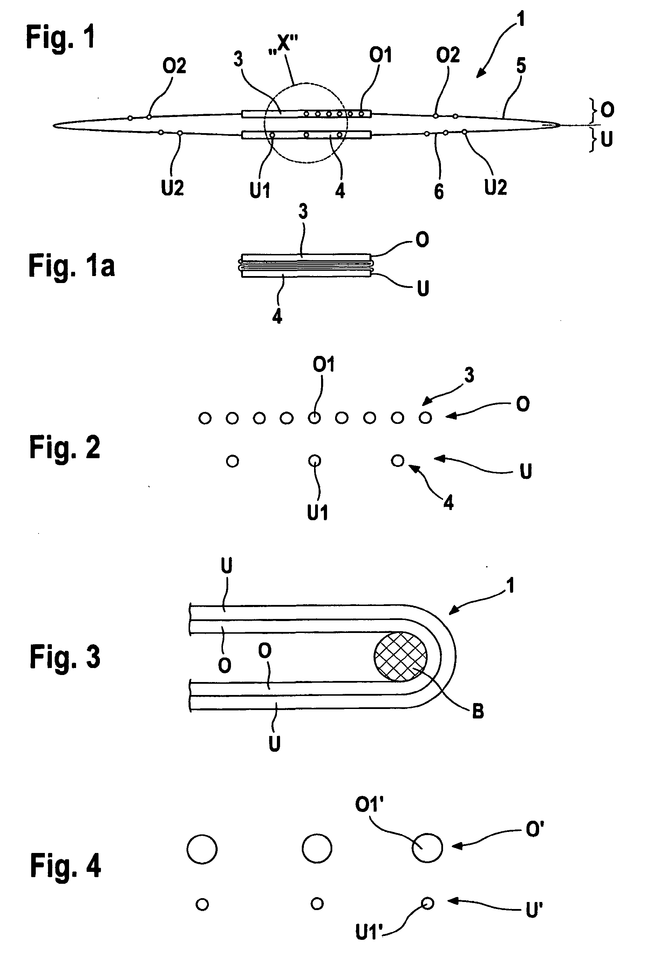

Fig. 1 zeigt ein erfindungsgemäßes Gurtband 1, stark schematisiert in einer Schnittdarstellung, in der Position, in welcher es in etwa die Webmaschine verlässt. Zu erkennen ist - in Längsrichtung des schlauchförmigen Gurtbandes 1 gesehen - eine obere Weblage O und eine untere Weblage U des zweilagigen Gurtbandes 1, mit symbolisch als Linien angegebenen Kettfadenbereichen 3 und 4, sowie 5 und 6. Die der besseren Übersicht wegen etwas auseinandergezogen dargestellten Weblagen O und U haben erste Kettfäden 01 und U1: die obere Weblage enthält erste Kettfäden 01 und die untere Weblage enthält erste Kettfäden U1. Die Kettfäden 01 und U1 liegen zahlenmäßig im Verhältnis 1,5 bis dreimal zu einmal für 01 zu U1 im Gurtband vor. Zweite Kettfäden 02 und U2, welche für die Längsbruchfestigkeit des Gurtbandes 1 keine wesentliche Funktion haben liegen in der oberen und der unteren Weblage vor und sind Teile des als Schlauch gewebten Luftsacks, den das schlauchförmige Gurtband 1 darstellt.

Im Einsatz des erfindungsgemäßen Gurtbandes muss man sich die die zweiten Kettfäden enthaltenden Kettfadenbereiche zwischen die mittleren Kettfadenbereiche gefaltet vorstellen (siehe Fig. 1 a), sodass von außen nur noch die die oberen und unteren ersten Kettfäden 01 und U1 enthaltenden Weblagenteile 3 und 4 zu erkennen sind.

Fig. 2 zeigt die Einzelheit "X" aus Fig. 1, welche nur die ersten Kettfäden 01 der oberen Weblage O und die ersten Kettfäden U1 der unteren Weblage U zeigen. Zur besseren Übersicht sind sämtliche zu dem erfindungsgemäßen Gurtband 1 gehörenden - sinngemäß parallel zur Zeichenebene verlaufenden - Schussfäden weggelassen. Fig. 2 soll beispielhaft zeigen, dass die obere Lage O dreimal soviel erste Kettfäden 01 enthält als die untere Weblage U erste Kettfäden U1 enthält.

In Fig. 3 ist geschnitten dargestellt ein etwa runder Beschlag B, um den das Gurtband 1 um etwa 180° umgelenkt gezeigt wird. Hierbei liegt die obere Weblage O am beschlag B an. Die untere Lage U liegt, beabstandet um die "Dicke" der oberen Lage O ebenfalls umgelenkt um den Beschlag B und wird, da vom Zentrum des runden Beschlags B weiter entfernt, gegenüber der oberen Lage O etwas gestreckt. Diese Streckung kann man sich als vervielfacht vorstellen, wenn das Gurtband anstatt nur um einen Beschlag B nun um die Wickelachse eines Aufrollautomaten oder Retraktors herumläuft und aufgewickelt wird.

Wird nun das Gurtband wieder abgewickelt oder abgerollt und soll es dann wieder gerade und flach am Körper des Fahrzeugpassagiers anliegen, dann ist dies mit dem erfindungsgemäßen Gurtband 1 vorteilhafterweise realisierbar, da der Umstand, dass die die Anzahl der ersten Kettfäden 01 der oberen Weblage O etwa 1,5-mal bis dreimal so groß ist wie die Anzahl der ersten Kettfäden U1 der unteren Weblage U die untere Weblage U sozusagen führt und die Streckung der ersten Kettfäden U1 der unteren Weblage U kompensiert erscheinen lässt. Überraschenderweise liegt das erfindungsgemäße Gurtband 1 aufgrund der erfindungsgemäßen Konstruktion, d. h. der zahlenmäßigen Anordnung der ersten Kettfäden 01 und U1 im Verhältnis von 1,5 bis 3 zu 1 (01 zu U1) nach dem Abwickeln ohne Welligkeit vor.

Weiter überraschenderweise liegt das erfindungsgemäße Gurtband 1 ebenfalls ohne Welligkeit vor, wenn erfindungsgemäß nach einer zweiten Lösung gemäß Anspruch 2 der Titer der ersten Kettfäden O1' der oberen Weblage O etwa 1,5-mal bis dreimal so groß ist wie der Titer der ersten Kettfäden U1' der unteren Weblage U, wie schematisch Fig. 4 zeigt.

Für die Erfindung kann beispielhaft für das Gurtband folgende vorteilhafte Verhältnislage gelten:

a) (z. B. Fig. 2)

$$\frac{\text{Anzahl erste Kettfäden O1 obere Weblage O}}{\text{Anzahl erste Kettfäden U1 untere Weblage U}} = \frac{3}{1} \quad \text{bei} \quad \frac{\text{Titer O1}}{\text{Titer U1}} = \frac{1}{1}$$

oder
b) (z.B. Fig. 4)

$$\frac{\text{Anzahl erste Kettfäden O1' (O')}}{\text{Anzahl erste Kettfäden U1' (U')}} = \frac{1}{1} \quad \text{bei} \quad \frac{\text{Titer O1' (O')}}{\text{Titer U1' (U')}} = \frac{3}{1}$$

Für das Beispiel a) haben sich erste Kettfäden 01 der oberen Weblage O mit einem Titer von etwa 1670 dtex und erste Kettfäden U1 der unteren Weblage U mit einem Titer von ebenfalls etwa 1670 dtex als besonders vorteilhaft gezeigt.

Für das Beispiel b) haben sich erste Kettfäden 01' der oberen Weblage O' mit einem Titer von etwa 1670 dtex und erste Kettfäden U1' der unteren Weblage U' mit einem Titer von etwa 550 dtex als besonders vorteilhaft gezeigt.

**Patentansprüche**

1. Aufblasbares gewebtes schlauchförmiges Gurtband, mit ersten Kettfäden einer oberen Weblage und ersten Kettfäden einer unteren Weblage, **dadurch gekennzeichnet, dass** die Anzahl der ersten Kettfäden (O1) der oberen Weblage (O) etwa 1,5-mal bis dreimal so groß ist wie die Anzahl der ersten Kettfäden (U1) der unteren Weblage (U).

2. Aufblasbares gewebtes schlauchförmiges Gurtband, mit ersten Kettfäden einer oberen Weblage und ersten Kettfäden einer unteren Weblage, **dadurch gekennzeichnet, dass** der Titer der ersten Kettfäden (01') der oberen Weblage (O') etwa 1,5-mal bis dreimal so groß ist wie der Titer der ersten Kettfäden (U1') der unteren Weblage (U').

**Claims**

1. An inflatable woven tubular belt comprising first warp threads in an upper woven layer and first warp threads in a lower woven layer **characterized in that** the number of first warp threads (O1) in the upper woven layer (O) is approx. 1.5 times to three times the number of first warp threads (U1) in the lower woven layer (U).

2. An inflatable woven tubular belt comprising first warp threads in an upper woven layer and first warp threads in a lower woven layer **characterized in that** the yarn count of the first warp threads (O1') in the upper woven layer (O') is approx. 1.5 times to three times the yarn count of first warp threads (U1') in the lower woven layer (U').

**Revendications**

1. Sangle tubulaire tissée gonflable, présentant des premiers fils de chaîne d'une couche tissée supérieure et des premiers fils de chaîne d'une couche tissée inférieure, **caractérisée en ce que** le nombre des premiers fils de chaîne (O1) de la couche tissée supérieure (O) est 1,5 à trois fois supérieur à celui des premiers fils de chaînes (U1) de la couche tissée inférieure (U).

2. Sangle tubulaire tissée gonflable, présentant des premiers fils de chaîne d'une couche tissée supérieure et des premiers fils de chaîne d'une couche tissée inférieure, **caractérisée en ce que** le titre des premiers fils de chaîne (O1') de la couche tissée supérieure (O') est environ 1,5 à trois fois plus gros que le titre des premiers fils de chaîne (U1') de la couche tissée inférieure (U').

**Fig. 1**

O2    3    "X"    O1    O2    1    5

O    3    O1    O2    5

}O
}U

U2    U1    4    6    U2

**Fig. 1a**

3

O

U

4

**Fig. 2**

O1

3

O

U1    U

4

**Fig. 3**

U

1

O

O

B

U

**Fig. 4**

O1'

O'

U1'    U'

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1056894 B1

- DE 19932940 A1